# EUROPEAN PATENT APPLICATION

(11) **EP 1 278 150 A2**
(43) Date of publication of application: **22.01.2003**
(21) Application number: 02254946.3
(22) Date of filing: 15.07.2002
(51) Int. Cl.: G06F 17/60

(54) **Improvements in digital communication methods for determining admittance to a negotiation**

(30) Priority: 18.07.2001 GB 0117542
(71) Applicant: Hewlett-Packard Company, Palo Alto, CA 94304 (US)
(72) Inventor: Yearworth, Michael, Bishopston, Bristol BS7 8EH (GB); Casassa Mont, Marco, Stoke Gifford, Bristol BS34 8BF (GB)
(74) Representative: Lawrence, Richard Anthony

(57) **Abstract**

The present invention provides a digital communication method for determining admittance to a negotiation, the method comprising the steps of: defining admittance criteria from a superset of parameters; at least one potential negotiation participant (T2-T4) making an admittance request to an admittance controller (AC), which admittance request includes a set of information relating to the superset of parameters and forming a subset thereof; and the admittance controller (AC) determining whether the admittance request satisfies the admittance criteria.

A corresponding digital computer system (4) is also disclosed.

## Description

The present invention relates to digital communication methods for determining admittance to a negotiation and corresponding digital computer system. The negotiation may take place in a marketplace

There are, generally, three relevant models of negotiations:
a) 1:many
b) 1:1
c) many:many

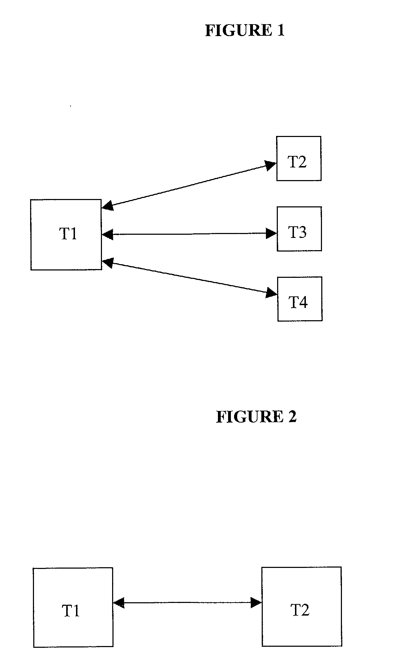

In a 1:many negotiation, illustrated schematically in Figure 1, a first trader T1 initiates the negotiation and communicates (ie negotiates and potentially trades) with a plurality of other traders T2, T3, T4 etc. This may be, for instance, an auction hosted by a marketplace. In the marketplace T1 could be a buyer and/or seller.

In a 1:1 negotiation, illustrated schematically in Figure 2, a first trader T1 initiates a negotiation with a second trader T2. This may be, for instance, a straightforward sale of goods. Generally, the initiator will have control of the negotiation (though T1 and T2 may each be selling to (or buying from) the other in which case there are two negotiations, each controlled by the respective seller).

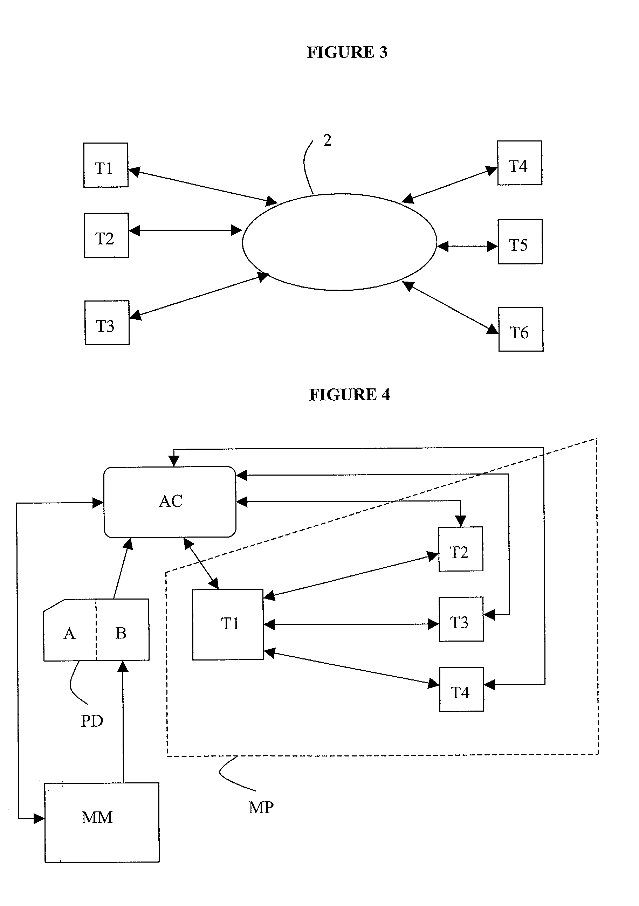

In a many:many negotiation, illustrated schematically in Figure 3, a plurality of traders T1-T6 etc deal with each other through the auspices of a communication medium which could be a marketplace controlled by a market maker 2. This may be, for instance, a stock exchange.

In each model, it is important that only those participants satisfying the required criteria are admitted to the negotiation. In the example of a marketplace these are usually imposed in a non-negotiable manner by the market maker. The market maker may require a given set of parameters to be revealed and only permit admittance to the marketplace if all of the parameters are revealed to it and are satisfactory. However, the situation is often more complex. For instance, some parameters may not be available to a trader seeking admittance to a market place or it may choose to withhold them.

For buyers the admittance criteria usually will include credit information, but often will also include identification information, address information, credit and payment guarantee instruments etc. For sellers, this may include evidence of title to the goods/services being sold, etc.

It is important to note that this requirement for admittance to the negotiation is separate from and generally prior to the negotiation of, for instance, a contract for the sale of goods or services.

Presently out of bounds communications, such as fax, letter, phone, etc are used to resolve admittance to a negotiation in a non-automated way.

Preferred embodiments of the present invention aim to obviate or overcome difficulties of the prior art, whether referred to herein or otherwise.

According to the present invention in a first aspect, there is provided a computer programmed to control admittance to a negotiation, the computer comprising a memory storing defined admittance criteria from a superset of parameters, digital communication means, and a processor programmed to receive admittacnce requests through the digital communication means and determine whether a received admittance request satisfies the admittance criteria, wherein the admittance request includes a set of information relating to the superset of parameters and forming a subset thereof, and to admit a potential participant to the negotiation if its admittance request satisfies the admittance criteria.

According to the present invention in a second aspect, there is provided a method by which an admittance controller determines admittance to a negotiation of a potential participant, the method comprising the steps of: obtaining admittance criteria selected from a superset of parameters; receiving from the potential participant by digital communication an admittance request, which admittance request includes a set of information relating to the superset of parameters and forming a subset thereof; determining whether the admittance request satisfies the admittance criteria, and if so, digitally communicating to a market maker for the negotiation that the admittance request meets the admittance criteria.

Thus a potential participant can choose selectively to reveal to an admittance controller its chosen parameter information to allow a determination of admittance.

Suitably, the superset of parameters is revealed to the potential participant.

Suitably, the admittance criteria includes an extent of disclosure requirement.

Suitably, the extent of disclosure requirement includes the party or parties to which the parameter information is to be revealed.

Suitably, the extent of disclosure requirement includes the timing of revealing of parameter information.

Suitably, admittance request information is kept confidential as between the potential participant and the admittance controller. This is of particular benefit when the admittance controller is a trusted third party.

Suitably, the admittance request includes an extent of disclosure statement.

Suitably, the extent of disclosure statement includes the party or parties to which the potential participant is willing to disclose the parameter information.

Suitably, the extent of disclosure statement includes the timing of revealing of parameter information.

Suitably, the determining step is carried out in a processor of a digital computer.

Suitably, if the admittance request satisfies the admittance criteria, the potential participant is admitted to the negotiation.

Suitably, if the admittance request does not satisfy the admittance criteria, the potential participant is informed of the same.

Suitably, the method comprises the additional step of the potential participant providing a different admittance request to the admittance controller.

An admittance controller may permit admittance if certain, not necessarily overlapping, combinations of parameters are revealed.

The present invention will now be described by way of example only, with reference to the drawings that follow; in which:
Figures 1-3 are schematic illustrations of, respectively, a 1:many negotiation, 1:1 negotiation and a many:many negotiation according to the prior art.
Figure 4 is a schematic illustration of a 1:many negotiation hosted by a marketplace according to a first embodiment of the present invention.
Figure 5 is a functional flow diagram illustrating operation of the method for establishing admittance to the negotiation of Figure 4.
Figure 6 is a schematic illustration of a computer system for use with the present invention.

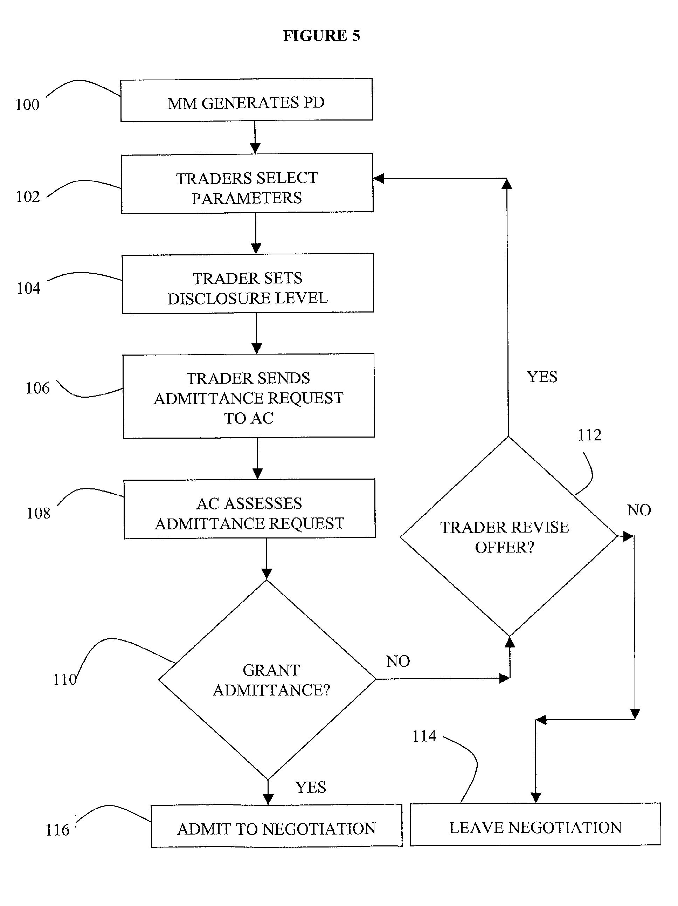

A first embodiment of the present invention for a 1:many negotiation model is described in relation to Figures 4 and 5. Referring to Figure 4, a first party, trader T1, is the initiator of a negotiation hosted in a marketplace (indicated schematically as MP) to which a plurality of further parties, traders T2, T3 and T4 (there may be many more) seek admittance. A market maker is shown at MM.

A trusted third party (TTP) acting the role of admittance controller (AC) is in communication with each of the parties T1-T4.

Communication between the parties T1-T4 and the AC is in the digital domain. Generally communication is via a distributed electronic network such as the internet, a wide area network or local area network. Communication between the parties may be obfuscated, which term includes encryption such as public key encryption.

Further, there is provided a parameters document (PD) to which each trader has access. In Figure 4 the PD is provided by a market maker MM to the AC. The PD has a first part A and a second part B. PD first part A is accessible in read-only format to the AC and to T1-T4 via the AC. The PD second part B is accessible in read-only format to the AC only. Only MM (in this arrangement)has the ability to amend any part of the PD, though this may be delegated to the AC. PD first part A sets out the superset of admissible parameters. These are the parameters the MM is willing to consider in making an assessment of whether to admit a trader to the negotiation in the marketplace MP. They will not all need to be provided by all traders to gain admittance. PD second part B provides to the AC requirement the MM (in this case) has for admittance to the negotiation in the marketplace MP.

In the Figure 4 example, the PD is provided by the MM, and the MM is the only party with the power to amend the PD (though it is indicated that this power could logically be delegated to the AC). This is not the only possible arrangement. The PD may in various embodiments be provided by the initiator, the market maker or the AC. For example, the initiator may only be prepared, in accordance with their private business criteria or local policies, to enter a negotiation with participants with particular credentials. The AC may itself operate according to particular policies, defining the types of credential that it is prepared to accept. Ability to amend the PD may similarly be limited to the creator of the PD, or may be required by another party. For example, if the PD has been created by the initiator, the MM or even the AC may require a greater or lesser power to amend in order to meet their own requirements for operation.

First part A of the PD may be a simple list of parameters such as:
- personal/company identification information
- credit information
- address information
- third party references information
- payment instrument type and details
- billing address
- shipping address
- historical information
- rating information
- proof of conformity to standards (eg ISO 9001) etc.

The PD may set out what type of identification information is acceptable, for instance identification information must include a passport number (for an individual) or registration number (for a company).

First part A of the PD may also specify the extent of disclosure options available. For instance, there may be a self-consistent combination of:
a) only reveal to AC
b) reveal to market maker
c) reveal a non-repudiable proof of the parameter (such as its digest) to the market maker.
d) reveal parameter specifics before negotiation for admittance starts
e) reveal parameter specifics when admittance parameters agreed
f) reveal on trade.

Second part B of the PD allows the AC to determine, without reference to MM, whether admittance is permitted.

It will be appreciated that a large number of possible criteria exist and these may be simple or complex. Generally there will be requirements with Boolean operators (eg AND, OR, NOT, etc). Two examples follow:

### Example 1

- Admit if:: Identification information provided to AC or MM prior to admittance
AND
Trader credit > £50,000 revealed to AC prior to admittance.

### Example 2

- Admit if:: Identification provided to MM prior to admittance
AND
Trader credit limit > £20,000 provided to AC prior to admittance
OR
Third party reference (if from predetermined party) provided to MM prior to admittance.

Referring now to Figure 5, a digital communication method for establishing admittance to the negotiation embodied by marketplace MP is described.

In step 100, as a precursor to the admittance negotiation, the market maker MM provides a PD as described above to the AC.

In step 102, a trader, say T2 as a potential negotiation participant, reviews the PD and selects those parameters that T2 is willing to provide for admittance to the negotiation. In step 104 T2 characterises each parameter by stating in an extent of disclosure statement the extent of disclosure thereof it is willing to offer. The extent of disclosure usually will include (i) the party or parties to which disclosure is made and (ii) the timing thereof. The parties to which disclosure can be made are the market maker, the AC and the other parties seeking admittance (T1, T3 and T4). There is usually little call for disclosure to other parties seeking admittance, but the option can be provided. More generally disclosure may be possible to regulatory authorities, banks, tax offices, trading associations, government, public records offices etc.

The timing of a disclosure will usually be one of d), e) and f) above.

Different parameters may have different characteristics. A default characteristic may be defined for each parameter which it is up to the party seeking admittance to change if they wish to do so.

For the purpose of this example, it is assumed that the parameters and characteristics offered by T2 are as follows.

| **Parameter** | **Characteristic** |
|---|---|
| Identification Information | a)reveal to market maker |
| | |
| | |
| | c)reveal parameter specifics before negotiation for admittance starts |
| | |
| Credit Information | a) only reveal to AC |
| | |
| | d) reveal parameter specifics when negotiation for admittance complete |

In step 106 the parameter identification and characteristic information is sent by T2 to AC as an admittance request. The parameters identified are a subset of the superset of parameters in the PD.

In step 108 AC analyses the parameter and characteristic information and determines whether they satisfy the admittance criteria. A decision whether to grant or refuse admittance is made at step 110.

Pursuing Example 1 above, the offer by T2 would meet the first criterion of offering to provide identification information to the AC prior to admittance, but the timing of the revealing of the credit information does not satisfy the second criterion that requires it prior to completion of admittance negotiations. In that case, the AC informs the trader T2 that the application for admittance is refused. This may, optionally, be accompanied by a statement as to the grounds on which the application failed (in this case the timing of the revealing of the credit information). Optionally the failed application request data may be transmitted to the MM.

The trader T2 can then revise (step 112) and resubmit (step 102) its offer for admittance or leave the negotiation (step 114).

Once the admittance criteria is met, the trader T2 is informed to that effect and permitted access to the negotiation subject to required information being revealed (step 116).

Similar negotiations can take place at substantially the same time by T1, T3 and/or T4.

When it is stated by the characteristic that the parameter will be revealed prior to admittance this may be provided to the AC with the request for admittance. So, in the case of credit information this may include the credit limit.

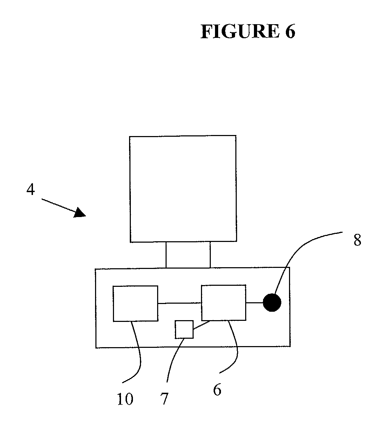

Each participant (T1-T4, AC, MM) may be embodied by a digital computer system 4 such as that shown in Figure 6 of the accompanying drawings. The computer system 4 comprises a processor 6 with associated memory 7, which processor 6 receives data from and outputs data to an input/output port 8. Computer system 4 is connected to a distributed electronic network by a modem 10. Thus, the AC can, using a computer system 4, automatically make admittance determinations, the determination being made by a processor 6. The participants may interact as peers, or alternatively a client/server architecture may be employed. If a client/server architecture is employed, a logical arrangement is for AC and probably MM to be servers, and for trading participants T1-T4 to be clients.

The method and apparatus described above can readily be adapted for 1:1 and many:many negotiations.

Thus, the determination of admittance to a negotiation can be substantially automated in a manner suitable for digital communications. Further, an AC implemented as a TTP is present to which traders may reveal sensitive information if required (and permitted for admittance by the PD).

## Claims

1. A computer programmed to control admittance to a negotiation, the computer comprising a memory storing defined admittance criteria from a superset of parameters, digital communication means, and a processor programmed to receive admittacnce requests through the digital communication means and determine whether a received admittance request satisfies the admittance criteria, wherein the admittance request includes a set of information relating to the superset of parameters and forming a subset thereof, and to admit a potential participant to the negotiation if its admittance request satisfies the admittance criteria.

2. A computer as claimed in claim 1, wherein the processor is further programmed to generate the admittance criteria for a negotiation.

3. A computer as claimed in claim 1, wherein the processor is further programmed to accept the admittance criteria for a negotiation from another party for that negotiation.

4. A computer as claimed in any preceding claim, wherein the processor is further programmed to keep admittance request information confidential between the computer and a potential participant submitting the admittance request.

5. A computer as claimed in any preceding claim, wherein the negotiation is initiated by an initiating participant and is conducted in a market controlled by a market maker, and wherein the computer represents a trusted third party independent of the initiating participant and the market maker.

6. A method by which an admittance controller determines admittance to a negotiation of a potential participant, the method comprising the steps of:
obtaining (102) admittance criteria selected from a superset of parameters;
receiving (106) from the potential participant by digital communication an admittance request, which admittance request includes a set of information relating to the superset of parameters and forming a subset thereof;
determining (108) whether the admittance request satisfies the admittance criteria, and if so, digitally communicating (116) to a market maker for the negotiation that the admittance request meets the admittance criteria.

7. A method according to claim 6, in which the admittance controller reveals the superset of parameters to the potential participant.

8. A method according to claim 6 or claim 7, in which the admittance criteria includes an extent of disclosure requirement.

9. A method according to claim 8, in which the extent of disclosure requirement includes the party or parties to which the parameter information is to be revealed.

10. A method according to claim 8, in which the extent of disclosure requirement includes the timing of revealing of parameter information.

11. A method according to any of claims 6 to 10, in which the admittance controller keeps admittance request information confidential between the potential participant and the admittance controller.

12. A method according to any of claims 6 to 11, in which the admittance controller is a trusted third party.

13. A method according to any of claims 6 to 12, in which the steps performed by the admittance controller are performed by a suitably programmed processor of a computer.

14. A method according to any of claims 6 to 13, in which if the admittance request satisfies the admittance criteria, the admittance controller admits the potential participant to the negotiation.

15. A method according to any of claims 6 to 14, in which if the admittance request does not satisfy the admittance criteria, the admittance controller does not admit the potential participant to the negotiation but informs the potential participant that the admittance request does not satisfy the admittance criteria.

16. A method according to claim 15, in which the admittance controller notifies the potential participant of reasons why the admittance request does not satisfy the admittance criteria.

17. A method according to claim 15 or claim 16, in which the admittance controller notifies the market maker of the failed admittance request.

18. A method according to any of claims 6 to 17, wherein the step of obtaining admittance criteria selected from a superset of parameters comprises generating the admittance criteria.

19. A method according to any of claims 6 to 17, wherein the step of obtaining admittance criteria selected from a superset of parameters comprises receiving the admittance criteria from another party.
